# FASCICULE DE BREVET EUROPEEN

(11) **EP 4 442 506 B1**
(45) Date de publication et mention de la délivrance du brevet: **10.09.2025**
(21) Numéro de dépôt: 24167898.6
(22) Date de dépôt: 29.03.2024
(51) Int. Cl.: B60P 1/00, B60P 1/40, E01C 19/20

(54) **BENNE DEMI-RONDE À FOND POUSSOIR ADAPTÉE AU DÉPÔT SUR LE SOL D'UN LIT DE MATIERE**
HALBWELLE MIT EINEM DRUCKBODEN, DER ZUR ABLAGERUNG AUF DEM BODEN EINES BETTES ANGEPASST IST
HALF-WRINKLE SKIP WITH PUSHER BASE ADAPTED FOR DEPOSITING A BED OF MATERIAL ON THE GROUND

(30) Priorité: 06.04.2023 FR 2303474
(43) Date de publication de la demande: 09.10.2024
(73) Titulaire: CI 85 (Carrosserie Industrielle et Services), 85140 Essarts en Bocage (FR)
(72) Inventeur: ARNAUD, Bernard, 85140 ESSARTS EN BOCAGE (FR)
(74) Mandataire: Cabinet Chaillot

(56) Documents cités:
- EP-A1- 0 017 587
- EP-A1- 3 763 568
- FR-A1- 2 658 765
- FR-A1- 3 038 578
- US-A- 3 212 657
- US-B2- 7 293 723

## Description

La présente invention porte sur un benne demi-ronde à fond poussoir adaptée au dépôt sur le sol d'un lit de matière, tel qu'un lit de gravillons.

Les camions gravillonneurs sont la plupart du temps des camions bennes équipés d'un diffuseur pour permettre la dépose sur le sol de gravillons. La benne est chargée de gravillons, puis est levée afin que la matière soit répandue par le diffuseur. Ce type de dispositif est par exemple décrit dans le document FR 2 528 085, EP 3 763 568 A1 et US 3 212 657 A.

La législation impose que les bennes ne soient plus levées afin d'augmenter la sécurité des opérateurs qui circulent à l'arrière de la benne.

FR 3 052 792 décrit un camion permettant d'épandre des gravillons sur le sol tout en ayant pas à lever la benne contenant les gravillons. Dans ce dispositif, le gravillonneur est placé devant la cabine du camion. Les gravillons sortent de façon classique à l'arrière de la benne et sont redirigés vers l'avant du camion par un convoyeur pour être déposés au sol.

Si cette solution permet de ne pas lever la benne, elle utilise toutefois une architecture complexe faisant appel à un convoyeur qui complique et ralentit l'opération car il déplace les gravillons sortant de la benne vers l'avant du camion. Ceci ne facilite pas le gravillonnage et la tenue des gravillons déposés au sol car ces derniers sont déposés à l'avant du camion et le camion passe alors sur les gravillons qui viennent d'être déposés.

Il existe donc un besoin pour un camion gravillonneur qui soit simple dans son architecture tout en permettant un gravillonnage par l'arrière du camion et sans avoir à lever la benne.

A cet effet, la présente invention porte sur une benne demi-ronde à fond poussoir destinée à être montée sur le châssis d'un véhicule porteur pour le dépôt sur le sol d'un lit de matière lorsque le véhicule porteur est en marche, ladite benne comportant un corps de benne présentant, à l'arrière si l'on considère le sens de déplacement vers l'avant du véhicule porteur, une paroi de fermeture opposée au fond poussoir, caractérisée par le fait que :
- dans le corps de benne est formée au voisinage de la paroi de fermeture au moins une trappe, dite trappe d'alimentation, apte à passer d'une première position, dans laquelle elle ferme une ouverture de décharge de la matière pratiquée dans le corps de la benne dans sa région de fond, à une seconde position, dans laquelle elle dégage ladite ouverture permettant l'évacuation de la matière par gravité ; et
- sous le corps de la benne est disposé un ensemble de distribution et de répartition de la matière sur le sol, ledit ensemble de distribution et de répartition de la matière comportant :
   - un caisson constituant un réceptacle recevant la matière à distribuer, laquelle tombe dans celui-ci par la ou les ouvertures de décharge dans leur position dégagée, une vis sans fin de répartition de la matière qui tombe dans le réceptacle étant montée dans celui-ci avec son axe disposé transversalement à la ligne longitudinale moyenne de la benne et parallèlement à un plan tangentiel au fond de benne ; et
   - des trappes, dites trappes de distribution de la matière sur le sol, dont chacune est apte à passer d'une première position, dans laquelle, elle ferme une ouverture de décharge de la matière pratiquée dans le fond du caisson, à une seconde position, dans laquelle elle dégage ladite ouverture permettant l'évacuation de la matière par gravité.

Le caisson peut présenter la forme générale d'une trémie, avec une paroi avant inclinée vers l'arrière, une paroi arrière inclinée vers l'avant au moins dans sa partie inférieure et réunie à son bord inférieur avec la paroi avant, et deux parois latérales, la vis sans fin étant montée par chacune de ses extrémités dans un palier à roulement porté par une paroi latérale respective du caisson, la ou les ouvertures de décharge de la matière sur le sol étant pratiquée(s) dans la paroi arrière au voisinage de sa jonction avec la paroi avant.

La ou les trappes d'alimentation peuvent être montées sous la benne, aptes à coulisser selon la ligne longitudinale moyenne de la benne, la ou les trappes présentant une surface supérieure de même concavité que la région du fond de benne contre lequel elle(s) coulisse(nt).

La ou chaque trappe d'alimentation peut être montée coulissante sous l'action d'un vérin dont le corps est fixé sous la benne à l'opposé de sa paroi arrière de fermeture et dont la tige est reliée à la trappe d'alimentation à l'opposé de la paroi de fermeture de la benne.

La ou chaque trappe d'alimentation peut être de forme rectangulaire en vue de dessus et est guidée latéralement par des organes de guidage fixés à ou portés par l'extérieur du fond de benne, avantageusement avec interposition d'une lame de matériau favorisant le coulissement.

Les trappes d'alimentation peuvent être au nombre de deux, avantageusement disposées de façon symétrique par rapport au plan central longitudinal de la benne.

Le caisson peut présenter une paroi arrière s'étendant, de chaque côté, au-delà des ouvertures de décharge de fond de benne, la vis de répartition permettant une distribution sur toute la largeur du véhicule porteur, les trappes de distribution étant réparties sur toute la paroi arrière du caisson.

Chaque ouverture de décharge pratiquée dans le fond du caisson peut être apte à être ouverte ou fermée par la trappe de distribution associée coulissant le long de la paroi arrière inclinée du caisson extérieurement à celui-ci, sous l'action d'un vérin dont la tige est fixée à la trappe et le corps est fixé à la paroi arrière du caisson en partie haute.

La benne selon l'invention peut comporter des moyens d'accrochage à une plate-forme de travail, sur laquelle un opérateur peut monter pour commander la sortie de la matière hors de la benne, qui assure également un lissage de cette matière déposée en lit sur le sol à mesure de l'avance du véhicule porteur, et que l'on vient fixer au véhicule porteur avant l'opération de distribution de la matière au sol.

Au moins un hublot peut être formé dans la paroi arrière du caisson permettant un regard sur la matière contenue dans le caisson par l'opérateur commandant la distribution de la matière avantageusement à partir d'une plate-forme de travail rapportée à l'arrière du véhicule porteur au début de l'opération de distribution de la matière au sol.

Une trappe de vision peut être pratiquée dans la paroi de fermeture arrière de la benne permettant un regard sur la matière contenue dans la benne par l'opérateur commandant la distribution de la matière avantageusement à partir d'une plate-forme de travail rapportée à l'arrière du véhicule porteur au début de l'opération.

La benne selon l'invention peut comporter, en partie haute, et de chaque côté, une poulie sur laquelle passe un câble dont une extrémité est fixée sur la tige d'un vérin dont le corps est fixé sur la benne, et dont l'autre extrémité est destinée à être fixée sur une plate-forme de travail rapportée à l'arrière du véhicule porteur au début de l'opération pour assurer un maintien de la plate-forme en position de fonctionnement.

Pour mieux illustrer l'objet de la présente invention, on va en décrire ci-après, à titre indicatif et non limitatif, un mode de réalisation particulier avec référence au dessin annexé, sur lequel :
- La Figure 1 est une vue schématique en coupe de la partie arrière d'une benne demi-ronde à fond poussoir contre laquelle on est venu monter une plate-forme de travail de gravillonnage connue en tant que telle ;
- La Figure 2 montre, à plus grande échelle, la partie arrière de la benne de la Figure 1, dans sa région inférieure et sans la plate-forme de travail, en position d'ouverture des trappes de fond de benne, à savoir des trappes d'alimentation ;
- La Figure 3 est une vue en coupe transversale de la partie arrière de la benne selon la ligne III-III de la Figure 1 ;
- La Figure 4 est une vue en coupe transversale de la partie arrière de la benne selon la ligne IV-IV de la Figure 1, la paroi inférieure des trappes d'alimentation étant réalisée selon une variante de la Figure 3 ;
- La Figure 5 est une vue de face de l'extérieur de la paroi arrière de fermeture de la benne en position fermée des trappes de distribution de la matière sur le sol.

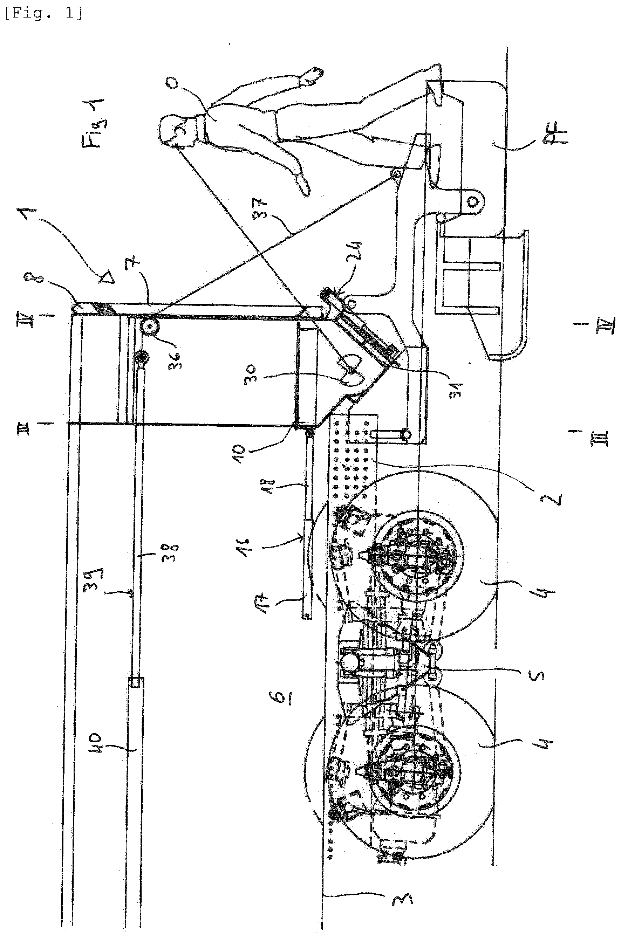

Si l'on se réfère tout d'abord à la Figure 1, on peut voir que l'on a représenté la partie arrière d'un véhicule porteur qui est un camion benne 1 dont on peut voir le châssis 2, sur lequel est montée la benne 3, les roues arrière 4 et la suspension 5.

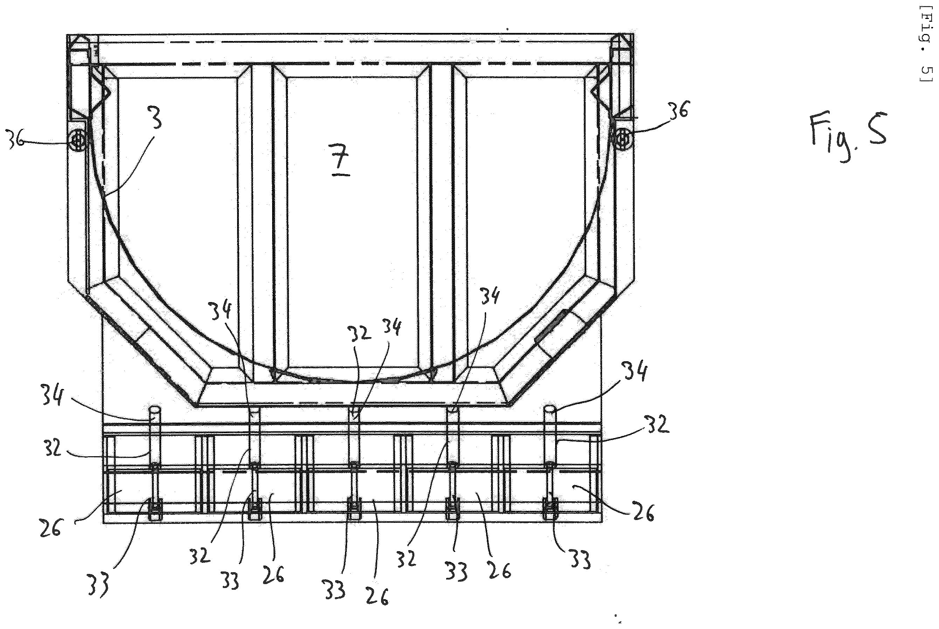

La benne 3 est une benne poussoir à paroi interne semi-cylindrique. C'est une benne ouverte en partie supérieure et formée par une partie centrale 6 de section transversale cintrée en forme de demi-cercle. La benne possède une paroi avant et, à l'opposé de la paroi avant, une porte de fermeture arrière 7 (Figures 1 et 5). Cette porte 7 est une porte hydraulique dont le dispositif de basculement en partie haute a été désigné par **8.**

La benne 3 possède un bouclier de poussée, non représenté, qui possède un corps de poussée et un vérin de déplacement du corps de poussée. Le vérin est rendu solidaire de la partie avant de la benne 3 par tout moyen de fixation approprié. Le vérin de déplacement permet de déplacer le bouclier en translation vers l'arrière et l'avant de la benne 3.

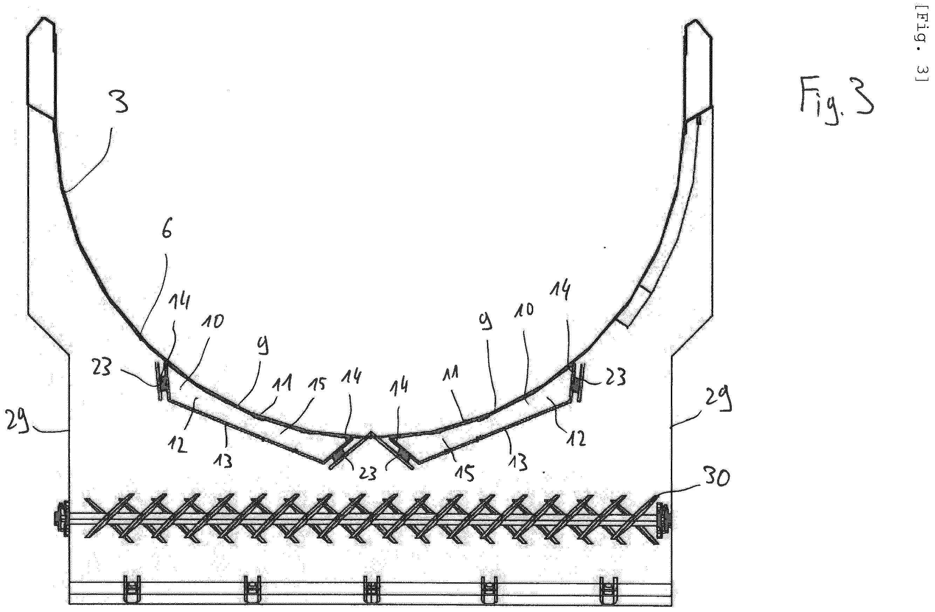

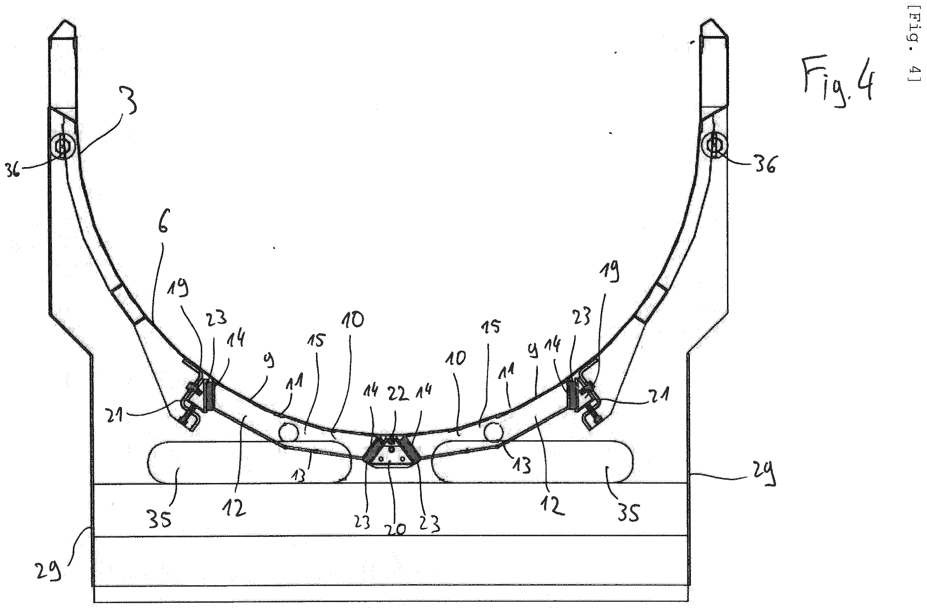

Sur la partie centrale 6 de la benne 3 et au voisinage de sa partie arrière à l'opposé de la paroi avant, deux ouvertures 9 sont formées dans le fond de la partie centrale 6, en étant disposées de façon symétrique par rapport au plan longitudinal central de la benne 3, comme on peut mieux le voir sur les Figures 3 et 4.

Les ouvertures 9 sont réalisées par découpe et dans l'exemple représenté, elles sont de forme générale rectangulaire.

Afin de pouvoir obturer chaque ouverture 9 de la benne 3, une trappe 10 est montée sous cette dernière et est apte à coulisser selon la ligne longitudinale moyenne du fond de la benne 3 entre une position dans laquelle l'ouverture 9 est fermée par ladite trappe 10 et une position dans laquelle l'ouverture 9 est complètement dégagée.

Chacune des trappes 10 comporte une plaque supérieure 11 qui est de forme rectangulaire et qui présente la même concavité que le fond de la partie centrale 6 de la benne 3. En utilisation, la plaque supérieure 11 de la trappe 10 viendra en contact avec la partie extérieure du fond de la partie centrale 6 de la benne 3.

Sous la plaque supérieure 11, la trappe 10 comporte un corps de trappe 12. Le corps 12 comporte une plaque inférieure 13 qui est repliée vers le haut le long de chacun de ses deux bords longitudinaux par une plaque latérale 14. La plaque 13 peut présenter une forme plate (Figure 3) ou présentant une pliure centrale (Figure 4).

Le corps 12 est fermé, à chacune de ses extrémités - avant et arrière - par une plaque 15, les deux plaques 15 étant soudées le long des bordures extérieures respectives de la plaque inférieure 13 et des plaques latérales 14, et possédant chacune une bordure supérieure qui est destinée à venir contre la plaque supérieure 11 et qui présente donc une concavité identique à celle de la plaque supérieure 11.

Le corps 12 est fixé à la plaque supérieure 11 par soudage, les bordures supérieures des plaques 15 et 16 suivant la partie cintrée de la plaque supérieure 11 et les bordures supérieures des plaques latérales 14 suivant la direction longitudinale de la plaque supérieure 11.

Le déplacement d'une trappe 10 entre la position où elle ferme une ouverture associée 9 et la position où elle la dégage est assurée par un vérin 16. Le vérin 16 comporte un corps cylindrique 17 porté par le dessous de la benne 3 et dans lequel se déplace une tige 18, le long de la direction longitudinale de la benne 3.

L'extrémité libre de la tige 18 est fixée sur la plaque avant 15 du corps 12 de la trappe associée 10. La tige 18 permet donc de déplacer la trappe 10 entre la position fermée et la position ouverte.

Sous la benne 3, sont disposées des organes de guidage 19, 20 des trappes 10, à savoir deux organes de guidage extérieurs 19 et un organe de guidage central 20. Les organes 19 sont fixés à la benne 3 par un système de fixation 21, et l'organe 20, par un dispositif 22.

Des lames dites de coulissement 23, facilitant le déplacement des trappes 10, faites par exemple de polytétrafluoroéthylène (PTFE - Téflon) sont disposées entre un organe de guidage 19, 20 et sa trappe adjacente 10.

Sous la benne 3 est disposé un ensemble 24 de distribution et de répartition de la matière sur le sol, lequel comporte un caisson 25 de réception de la matière tombant des ouvertures 9, et des trappes 26 dites trappes de distribution (au nombre de cinq dans l'exemple représenté - voir Figure 5).

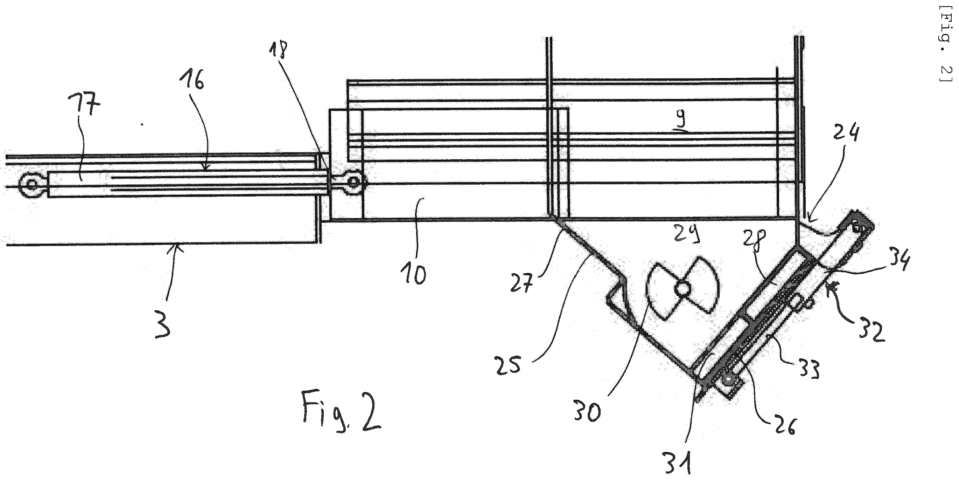

Le caisson 25 présente la forme générale d'une trémie, avec une paroi avant 27 inclinée vers l'arrière, une paroi arrière 28 inclinée vers l'avant dans sa partie moyenne et inférieure et réunie à son bord inférieur avec la paroi avant 27, et deux parois latérales 29, une vis sans fin 30 de répartition de la matière étant montée par chacune de ses extrémités dans un palier à roulement porté par une paroi latérale 29 respective du caisson 25, des ouvertures 31 de décharge de la matière sur le sol étant pratiquées dans la paroi arrière au voisinage de sa jonction avec la paroi avant (voir Figures 1 et 2).

La paroi arrière 28 du caisson 25 s'étend, de chaque côté, au-delà des ouvertures 9 de décharge de fond de benne, la vis de répartition 30 permettant une distribution sur toute la largeur du véhicule porteur 1, les trappes 26 de distribution étant réparties sur toute la paroi arrière 28 du caisson 25, leur nombre étant égal à celui des ouvertures 31 auxquelles elles correspondent.

Chaque ouverture de décharge 31 pratiquée dans le fond du caisson 25 est apte à être ouverte ou fermée par la trappe de distribution associée 26 coulissant le long de la paroi arrière inclinée 28 du caisson 25 extérieurement à celui-ci, sous l'action d'un vérin 32 dont la tige 33 est fixée à la trappe 26 et le corps 34 est fixé à la paroi arrière 28 du caisson 25 en partie haute.

La benne 3 comporte des moyens d'accrochage (non représentés) à une plate-forme de travail (PF), sur laquelle un opérateur O monte pour commander la sortie de la matière hors de la benne 3, qui assure également un lissage de cette matière déposée en lit sur le sol à mesure de l'avance du véhicule porteur 1, et que l'on vient fixer au véhicule porteur 1 avant l'opération de distribution de la matière au sol. Une telle plate-forme ne sera pas décrite davantage car elle est bien connue.

Deux hublots 35 (Figure 4) sont formés dans la paroi arrière 28 du caisson 25, permettant un regard sur la matière contenue dans le caisson 25 par l'opérateur O commandant la distribution de la matière à partir de la plate-forme (PF) de travail rapportée à l'arrière du véhicule porteur 1 au début de l'opération de distribution de la matière au sol.

Une trappe de vision, non représentée, peut être pratiquée dans la paroi de fermeture arrière 7 de la benne 3 permettant un regard sur la matière contenue dans la benne 3 par l'opérateur commandant la distribution de la matière avantageusement à partir de la plate-forme (PF) de travail rapportée à l'arrière du véhicule porteur 1 au début de l'opération.

La benne 3 comporte, en partie haute, et de chaque côté, une poulie 36 sur laquelle passe un câble 37 dont une extrémité est fixée sur la tige 38 d'un vérin 39 dont le corps 40 est fixé sur la benne 3, et dont l'autre extrémité est destinée à être fixée sur la plate-forme (PF) de travail rapportée à l'arrière du véhicule porteur 1 au début de l'opération pour assurer un maintien de la plate-forme (PF) en position de fonctionnement.

Lorsque l'on vient distribuer de la matière sur le sol, l'opérateur O monte sur la plate-forme (PF), le véhicule porteur 1 roulant à faible vitesse. Il commande le passage des trappes 10 en position ouverte. La matière tombe alors dans le caisson 25 et la vis sans fin 30 répartit la matière dans toute la largeur du caisson 25 et il commande l'ouverture des trappes 26 qui correspondent à l'emplacement où le dépôt de la matière est prévu.

## Revendications

1. - Benne demi-ronde à fond poussoir (3) destinée à être montée sur le châssis (2) d'un véhicule porteur (1) pour le dépôt sur le sol d'un lit de matière lorsque le véhicule porteur (1) est en marche, ladite benne (3) comportant un corps de benne présentant, à l'arrière si l'on considère le sens de déplacement vers l'avant du véhicule porteur (1), une paroi de fermeture (7) opposée au fond poussoir, où
- dans le corps de benne est formée au voisinage de la paroi de fermeture (7) au moins une trappe (10), dite trappe d'alimentation, apte à passer d'une première position, dans laquelle elle ferme une ouverture (9) de décharge de la matière pratiquée dans le corps de la benne dans sa région de fond, à une seconde position, dans laquelle elle dégage ladite ouverture (9) permettant l'évacuation de la matière par gravité ;
**caractérisée par le fait que** :
- sous le corps de la benne est disposé un ensemble de distribution et de répartition (24) de la matière sur le sol, ledit ensemble de distribution et de répartition (24) de la matière comportant :
- un caisson (25) constituant un réceptacle recevant la matière à distribuer, laquelle tombe dans celui-ci par la ou les ouvertures (9) de décharge dans leur position dégagée, une vis sans fin (30) de répartition de la matière qui tombe dans le réceptacle étant montée dans celui-ci avec son axe disposé transversalement à la ligne longitudinale moyenne de la benne (3) et parallèlement à un plan tangentiel au fond de benne ; et
- des trappes (26), dites trappes de distribution de la matière sur le sol, dont chacune est apte à passer d'une première position, dans laquelle, elle ferme une ouverture (31) de décharge de la matière pratiquée dans le fond du caisson, à une seconde position, dans laquelle elle dégage ladite ouverture (31) permettant l'évacuation de la matière par gravité.

2. - Benne (3) selon la revendication 1, **caractérisée par le fait que** le caisson (25) présente la forme générale d'une trémie, avec une paroi avant (27) inclinée vers l'arrière, une paroi arrière (28) inclinée vers l'avant au moins dans sa partie inférieure et réunie à son bord inférieur avec la paroi avant (27), et deux parois latérales (29), la vis sans fin (30) étant montée par chacune de ses extrémités dans un palier à roulement porté par une paroi latérale (29) respective du caisson (25), la ou les ouvertures de décharge (31) de la matière sur le sol étant pratiquée(s) dans la paroi arrière (28) au voisinage de sa jonction avec la paroi avant (27).

3. - Benne (3) selon l'une des revendications 1 et 2, **caractérisée par le fait que** la ou les trappes d'alimentation (10) sont montées sous la benne (3), aptes à coulisser selon la ligne longitudinale moyenne de la benne (3), la ou les trappes (10) présentant une surface supérieure de même concavité que la région du fond de benne (3) contre lequel elle(s) coulisse(nt).

4. - Benne (3) selon la revendication 3, **caractérisée par le fait que** la ou chaque trappe (10) d'alimentation est montée coulissante sous l'action d'un vérin (16) dont le corps (17) est fixé sous la benne (3) à l'opposé de sa paroi arrière de fermeture (7) et dont la tige (18) est reliée à la trappe d'alimentation (10) à l'opposé de la paroi de fermeture (7) de la benne (3).

5. - Benne (3) selon l'une des revendications 3 et 4, **caractérisée par le fait que** la ou chaque trappe (10) d'alimentation est de forme rectangulaire en vue de dessus et est guidée latéralement par des organes de guidage (19, 20) fixés à ou portés par l'extérieur du fond de benne (3), avantageusement avec interposition d'une lame (23) de matériau favorisant le coulissement.

6. - Benne (3) selon l'une des revendications 3 à 5, **caractérisée par le fait que** les trappes (10) d'alimentation sont au nombre de deux, avantageusement disposées de façon symétrique par rapport au plan central longitudinal de la benne (3).

7. - Benne (3) selon l'une des revendications 1 à 6, **caractérisée par le fait que** le caisson (25) présente une paroi arrière (28) s'étendant, de chaque côté, au-delà des ouvertures (31) de décharge de fond de benne, la vis de répartition (30) permettant une distribution sur toute la largeur du véhicule porteur (1), les trappes de distribution (26) étant réparties sur toute la paroi arrière (28) du caisson (25).

8. - Benne selon l'une des revendications 2 à 7, **caractérisée par le fait que** chaque ouverture (31) de décharge pratiquée dans le fond du caisson (25) est apte à être ouverte ou fermée par la trappe de distribution (26) associée coulissant le long de la paroi arrière (28) inclinée du caisson extérieurement à celui-ci, sous l'action d'un vérin (32) dont la tige (33) est fixée à la trappe (26) et le corps (34) est fixé à la paroi arrière (28) du caisson (25) en partie haute.

9. - Benne (3) selon l'une des revendications 1 à 8, **caractérisée par le fait qu'**elle comporte des moyens d'accrochage à une plate-forme (PF) de travail, sur laquelle un opérateur (O) peut monter pour commander la sortie de la matière hors de la benne (3), qui assure également un lissage de cette matière déposée en lit sur le sol à mesure de l'avance du véhicule porteur (1), et que l'on vient fixer au véhicule porteur (1) avant l'opération de distribution de la matière au sol.

10. - Benne (3) selon l'une des revendications 1 à 9, **caractérisée par le fait qu'**au moins un hublot (35) est formé dans la paroi arrière (28) du caisson (25) permettant un regard sur la matière contenue dans le caisson (25) par l'opérateur (O) commandant la distribution de la matière avantageusement à partir d'une plate-forme de travail (PF) rapportée à l'arrière du véhicule porteur (1) au début de l'opération de distribution de la matière au sol.

11. - Benne (3) selon l'une des revendications 1 à 10, **caractérisée par le fait qu'**une trappe de vision est pratiquée dans la paroi de fermeture arrière (7) de la benne (3) permettant un regard sur la matière contenue dans la benne (3) par l'opérateur (O) commandant la distribution de la matière avantageusement à partir d'une plate-forme de travail (PF) rapportée à l'arrière du véhicule porteur (1) au début de l'opération.

12. - Benne (3) selon l'une des revendications 1 à 11, **caractérisée par le fait qu'**elle comporte, en partie haute, et de chaque côté, une poulie (36) sur laquelle passe un câble (37) dont une extrémité est fixée sur la tige (38) d'un vérin (39) dont le corps (40) est fixé sur la benne (3), et dont l'autre extrémité est destinée à être fixée sur une plate-forme de travail (PF) rapportée à l'arrière du véhicule porteur (1) au début de l'opération pour assurer un maintien de la plate-forme (PF) en position de fonctionnement.

## Patentansprüche

1. - Halbrunde Kipper mit Schubboden (3), die dazu bestimmt ist, auf dem Fahrgestell (2) eines Trägerfahrzeugs (1) montiert zu werden, um auf dem Boden ein Materialbett abzulegen, wenn das Trägerfahrzeug (1) in Bewegung ist, wobei der Kipper (3) einen Kipperkörper umfasst, der hinten, wenn man die Fahrtrichtung des Trägerfahrzeugs (1) nach vorne betrachtet, eine dem Schubboden gegenüberliegende Abschlusswand (7) aufweist, wobei:
- in dem Kipperkörper in der Nähe der Verschlusswand (7) mindestens eine Klappe (10), die Zuführklappe genannt wird, ausgebildet ist, die von einer ersten Position, in der sie eine in dem Kipperkörper in seinem Bodenbereich ausgebildete Öffnung (9) zur Entladung des Materials verschließt, in eine zweite Position übergehen kann, in der sie die Öffnung (9) freigibt, wodurch die Entladung des Materials durch Schwerkraft ermöglicht wird;
**dadurch gekennzeichnet dass** :
- unter dem Körper des Kippers eine Anordnung (24) zum Verteilen und Aufteilen des Materials auf dem Boden angeordnet ist, wobei die Anordnung (24) zum Verteilen und Aufteilen des Materials umfasst:
- einen Kasten (25), der einen Behälter bildet, der das zu verteilende Material aufnimmt, das in diesen durch die Entladeöffnung(en) (9) in ihrer freien Position fällt, wobei eine Schnecke (30) zur Aufteilung des Materials, das in den Behälter fällt, in diesem montiert ist, wobei ihre Achse quer zur mittleren Längslinie des Kippers (3) und parallel zu einer Tangentialebene zum Boden des Kippers angeordnet ist; und
- Klappen (26), die als Materialverteilungsklappen auf dem Boden bezeichnet werden und von denen jede von einer ersten Position, in der sie eine im Boden des Kastens ausgebildete Öffnung (31) zum Entlastung des Materials schließt, in eine zweite Position übergehen kann, in der sie die Öffnung (31) freigibt, wodurch das Material durch Schwerkraft abtransportiert werden kann.

2. - Kipper (3) nach Anspruch 1, **dadurch gekennzeichnet, dass** der Kasten (25) die allgemeine Form eines Trichters hat, mit einer nach hinten geneigten Vorderwand (27), einer Rückwand (28), die zumindest in ihrem unteren Teil nach vorne geneigt ist und an ihrem unteren Rand mit der Vorderwand (27) verbunden ist, und zwei Seitenwänden (29), wobei die Schnecke (30) mit jedem ihrer Enden in einem Wälzlager montiert ist, das von einer jeweiligen Seitenwand (29) des Kastens (25) getragen wird, wobei die Öffnung(en) (31) zum Austragen des Materials auf den Boden in der Rückwand (28) in der Nähe ihrer Verbindung mit der Vorderwand (27) ausgebildet ist (sind).

3. - Kipper (3) nach einem der Ansprüche 1 und 2, **dadurch gekennzeichnet, dass** die Zuführklappe(n) (10) unter den Kipper (3) montiert ist/sind, geeignet, entlang der mittleren Längslinie des Kippers (3) zu gleiten, wobei die Klappe(n) (10) eine obere Oberfläche mit der gleichen Konkavität wie der Bereich des Kipperbodens (3) aufweist/aufweisen, gegen den sie gleitet/gleiten.

4. - Kipper (3) nach Anspruch 3, **dadurch gekennzeichnet, dass** die oder jede Zuführklappe (10) unter der Wirkung eines Zylinders (16), dessen Körper (17) unter den Kipper (3) gegenüber ihrer hinteren Schließwand (7) befestigt ist und dessen Stange (18) mit der Zuführklappe (10) gegenüber der Abschlusswand (7) des Kippers (3) verbunden ist, verschiebbar montiert ist.

5. - Kipper (3) nach einem der Ansprüche 3 und 4, **dadurch gekennzeichnet, dass** die oder jede Zuführungsklappe (10) in der Draufsicht rechteckig ist und seitlich durch Führungsorgane (19, 20) geführt wird, die an der Außenseite des Kipperbodens (3) befestigt sind oder von dieser getragen werden, vorteilhafterweise unter Zwischenschaltung einer Lamelle (23) aus gleitförderndem Material.

6. - Kipper (3) nach einem der Ansprüche 3 bis 5, **dadurch gekennzeichnet, dass** die Zuführklappen (10) zwei sind, die vorteilhafterweise symmetrisch zur Längsmittelebene des Klappers (3) angeordnet sind.

7. - Kipper (3) nach einem der Ansprüche 1 bis 6, **dadurch gekennzeichnet, dass** der Kasten (25) eine Rückwand (28) aufweist, die sich auf jeder Seite über die Entlastungsöffnungen (31) des Kipperbodens hinaus erstreckt, wobei die Verteilerschnecke (30) eine Verteilung über die gesamte Breite des Trägerfahrzeugs (1) ermöglicht und die Verteilerklappen (26) über die gesamte Rückwand (28) des Kastens (25) verteilt sind.

8. - Kipper nach einem der Ansprüche 2 bis 7, **dadurch gekennzeichnet, dass** jede im Boden des Kastens (25) ausgebildete Entlastungsöffnung (31) geeignet ist, durch die zugehörige Verteilerklappe (26) geöffnet oder geschlossen zu werden, die entlang der geneigten Rückwand (28) des Kastens außerhalb desselben verschiebbar ist, unter der Wirkung eines Zylinders (32), dessen Stange (33) an der Klappe (26) befestigt ist und dessen Körper (34) an der Rückwand (28) des Kastens (25) im oberen Bereich befestigt ist.

9. - Kipper (3) nach einem der Ansprüche 1 bis 8, **dadurch gekennzeichnet, dass** sie Mittel zum Anhängen an eine Arbeitsplattform (PF) aufweist, auf die ein Bediener (O) steigen kann, um den Austritt des Materials aus dem Kipper (3) zu steuern, die auch eine Glättung dieses Materials gewährleistet, das in einem Bett auf dem Boden in dem Maße abgelegt wird, wie das Trägerfahrzeug (1) vorrückt, und die vor dem Vorgang der Verteilung des Materials auf dem Boden am Trägerfahrzeug (1) befestigt wird.

10. - Kipper (3) nach einem der Ansprüche 1 bis 9, **dadurch gekennzeichnet, dass** mindestens ein Bullauge (35) in der Rückwand (28) des Kastens (25) ausgebildet ist, das einen Blick auf das im Kasten (25) enthaltene Material durch den Bediener (O) ermöglicht, der die Verteilung des Materials steuert, vorteilhafterweise von einer Arbeitsplattform (PF) aus, die an der Rückseite des Trägerfahrzeugs (1) zu Beginn des Vorgangs der Verteilung des Materials auf dem Boden angebracht ist.

11. - Kipper (3) nach einem der Ansprüche 1 bis 10, **dadurch gekennzeichnet, dass** in der hinteren Verschlusswand (7) des Kippers (3) eine Sichtklappe ausgebildet ist, die einen Blick auf das in dem Kipper (3) enthaltene Material durch den Bediener (O) ermöglicht, der die Verteilung des Materials vorteilhafterweise von einer Arbeitsplattform (PF) aus steuert, die zu Beginn des Vorgangs an der Rückseite des Trägerfahrzeugs (1) angebracht ist.

12. - Kipper (3) nach einem der Ansprüche 1 bis 11, **dadurch gekennzeichnet, dass** sie im oberen Teil und auf jeder Seite eine Rolle (36) aufweist, über die ein Kabel (37) läuft, dessen eines Ende an der Stange (38) eines Zylinders (39) befestigt ist, dessen Körper (40) an dem Kipper (3) befestigt ist, und dessen anderes Ende dazu bestimmt ist, an einer Arbeitsplattform (PF) befestigt zu werden, die zu Beginn des Vorgangs am Heck des Trägerfahrzeugs (1) angebracht wird, um ein Halten der Plattform (PF) in der Betriebsstellung zu gewährleisten.

## Claims

1. - Half-round skip with pusher base (3) intended to be mounted on the chassis (2) of a carrier vehicle (1) for depositing a bed of material on the ground when the carrier vehicle (1) is moving, said skip (3) comprising a skip body having, at the rear if we consider the direction of forward travel of the carrier vehicle (1), a closure wall (7) opposite the pusher base, where :
- in the skip body is formed in the vicinity of the closure wall (7) at least one hatch (10), referred to as feed hatch, capable of moving from a first position, in which it closes a material discharge opening (9) made in the skip body in its bottom region, to a second position, in which it frees said opening (9) allowing the material to be discharged by gravity;
**characterized by** the fact that :
- an assembly (24) for dispensing and spreading the material on the ground is disposed under the skip body, said assembly (24) for dispensing and spreading the material comprising :
- a box (25) constituting a receptacle receiving the material to be dispensed, which falls into it through the discharge aperture or apertures (9) in their disengaged position, an endless screw (30) for spreading the material which falls into the receptacle being mounted therein with its axis disposed transversely to the mean longitudinal line of the skip (3) and parallel to a plane tangential to the bottom of the skip; and
- hatches (26), known as hatches for dispensing the material on the ground, each of which is able to move from a first position, in which it closes a material discharge opening (31) made in the bottom of the box, to a second position, in which it opens said opening (31) allowing the material to be discharged by gravity.

2. - Skip (3) according to claim **1, characterised in that** the box (25) has the general shape of a hopper, with a front wall (27) inclined towards the rear, a rear wall (28) inclined towards the front at least in its lower part and joined at its lower edge to the front wall (27), and two side walls (29), the endless screw (30) being mounted by each of its ends in a rolling bearing carried by a respective side wall (29) of the box (25), the opening or openings (31) for discharging the material onto the ground being formed in the rear wall (28) in the vicinity of its junction with the front wall (27).

3. - Skip (3) according to anyone of claims 1 and **2, characterized in that** the feed hatch or hatches (10) are mounted under the skip (3), able to slide along the mean longitudinal line of the skip (3), the hatch or hatches (10) having an upper surface of the same concavity as the region of the bottom of the skip (3) against which it or they slide.

4. - Skip (3) according to claim 3, **characterized in that** the or each feed hatch (10) is mounted so as to slide under the action of a cylinder (16), the body (17) of which is attached under the skip (3) opposite its rear closure wall (7) and the rod (18) of which is connected to the feed hatch (10) opposite the closure wall (7) of the skip (3).

5. - Skip (3) according to anyone of claims 3 and 4, **characterised in that** the or each feed hatch (10) is rectangular in plan view and is guided laterally by guide members (19, 20) attached to or carried by the outside of the bottom of the skip (3), advantageously with the interposition of a strip (23) of a material promoting sliding.

6. - Skip (3) according to anyone of claims 3 to 5, **characterised in that** there are two feed hatches (10), advantageously arranged symmetrically with respect to the longitudinal central plane of the skip (3).

7. - Skip (3) according to anyone of claims 1 to 6, **characterized in that** the box (25) has a rear wall (28) extending, on each side, beyond the skip bottom discharge openings (31), the spreading screw (30) allowing dispensing over the entire width of the carrier vehicle (1), the dispensing hatches (26) being distributed over the entire rear wall (28) of the box (25).

8. - Skip according to anyone of claims 2 to 7, **characterized in that** each discharge opening (31) made in the bottom of the box (25) is able to be opened or closed by the associated dispensing hatch (26) sliding along the inclined rear wall (28) of the box outside the latter, under the action of a cylinder (32), the rod (33) of which is attached to the hatch (26) and the body (34) of which is attached to the rear wall (28) of the box (25) at the top.

9. - Skip (3) according to anyone of claims 1 to 8, **characterised in that** it comprises means for attachment to a working platform (PF), on which an operator (O) can climb to control the discharge of the material from the skip (3), which also ensures smoothing of this material deposited in a bed on the ground as the carrier vehicle (1) moves forward, and which is attached to the carrier vehicle (1) before the operation of dispensing the material on the ground.

10. - Skip (3) according to anyone of claims 1 to 9, **characterized in that** at least one viewing window (35) is formed in the rear wall (28) of the box (25) allowing a view of the material contained in the box (25) by the operator (O) controlling the dispensing of the material advantageously from a working platform (PF) attached to the rear of the carrier vehicle (1) at the start of the operation of distributing the material on the ground.

11. - Skip (3) according to anyone of claims 1 to 10, **characterised in that** a viewing hatch is made in the rear closure wall (7) of the skip (3) allowing a view of the material contained in the skip (3) by the operator (O) controlling the dispensing of the material advantageously from a working platform (PF) attached to the rear of the carrier vehicle (1) at the start of the operation.

12. - Skip (3) according to anyone of claims 1 to 11, **characterised in that** it comprises, at the top, and on each side, a pulley (36) over which passes a cable (37), one end of which is attached to the rod (38) of a cylinder (39), the body (40) of which is fixed to the skip (3), and the other end of which is intended to be fixed to a working platform (PF) attached to the rear of the carrier vehicle (1) at the start of the operation to hold the platform (PF) in the operating position.
